# EUROPEAN PATENT APPLICATION

(11) **EP 4 782 253 A1**
(43) Date of publication of application: **29.07.2026**
(21) Application number: 25226256.3
(22) Date of filing: 22.12.2025
(51) Int. Cl.: B60L 53/14, B60L 53/16, B60L 53/18, B60L 53/62

(54) **ANTI-THEFT SYSTEM**

(30) Priority: 28.01.2025 JP 2025012068
(71) Applicant: Suzuki Motor Corporation, Hamamatsu-shi, Shizuoka 432-8611 (JP)
(72) Inventor: EGUCHI, Takuya, Hamamatsu-shi (JP)
(74) Representative: Haseltine Lake Kempner LLP

(57) **Abstract**

To appropriately prevent theft of a charging device while charging using an on-road charging facility. A charging device (32) supplies power from an on-road charging facility (29) to a battery (31) of an electric vehicle (1). An anti-theft system (37) for this charging device is provided with a control device (38) that monitors a charging state of the battery, and an alarm device (39) that issues an alarm under control of the control device. The control device activates the alarm device when the control device detects that the charging device is removed during charging.

## Description

### TECHNICAL FIELD

The present invention relates to an anti-theft system.

### BACKGROUND ART

In general, electric vehicles are charged using on-road charging facilities installed in parking lots or the like (see, for example, Patent Literature 1). In an electric vehicle described in Patent Literature 1, a charging cable is removed from an accommodation space under a seat, and a connector at one end of the charging cable is inserted into a charging port of the electric vehicle, and a plug at the other end of the charging cable is inserted into a charging port of a charging station. When the electric vehicle is connected to the charging station via the charging cable, charging of a battery begins. During charging, the charging station and a controller of the electric vehicle communicate with each other to adjust charging speed, or the like.

### CITATION LIST

### PATENT LITERATURE

Patent Literature 1: JP2016-199236A

### SUMMARY OF INVENTION

### TECHNICAL PROBLEM

Incidentally, during charging of the electric vehicle described in Patent Literature 1, the charging cable is left in a state of being inserted. Generally, anti-theft measures are taken for electric vehicles, but sufficient anti-theft measures are not taken for charging devices such as charging cables.

The present invention is made in consideration of the above-mentioned points, and has an object to provide an anti-theft system that can appropriately prevent theft of a charging device while an electric vehicle is being charged using on-road charging facility.

### SOLUTION TO PROBLEM

An anti-theft system according to an aspect of the present invention is an anti-theft system for a charging device that supplies power to a battery of an electric vehicle from an on-road charging facility, the system including a control device that monitors a charging state of the battery, and an alarm device that issues an alarm under control of the control device, where the control device activates the alarm device when the control device detects that the charging device is removed during charging.

### ADVANTAGEOUS EFFECTS OF INVENTION

According to the anti-theft system of the aspect of the present invention, when the charging device is removed during charging, an alarm is issued to inform surroundings of the abnormality, thereby effectively preventing theft of the charging device. In addition, a connection status of the charging device is generally monitored to prevent the electric vehicle from traveling while the charging device is connected, and by utilizing this monitoring function, an anti-theft system for the charging device can be easily added.

### BRIEF DESCRIPTION OF DRAWINGS

FIG. 1 is a left side view of a saddle-type electric vehicle according to an example.
FIG. 2 is a block diagram illustrating a charging system according to the example.
FIG. 3 is a flowchart of an anti-theft process according to the example.
FIG. 4 is a block diagram illustrating a charging system according to a modification example.

### DESCRIPTION OF EMBODIMENTS

A charging device according to an aspect of the present invention supplies power to a battery of an electric vehicle from an on-road charging facility. In this anti-theft system for a charging device, a charging state of the battery is monitored by a control device, and the control device also controls issuance of an alarm from an alarm device. When the control device detects that the charging device is removed during charging, the alarm device is activated, and the alarm notifies the surroundings of the abnormality, thereby effectively preventing theft of the charging device. In addition, a connection status of the charging device is generally monitored to prevent the electric vehicle from traveling while the charging device is connected, and by utilizing this monitoring function, an anti-theft system for the charging device can be easily added.

### [Example]

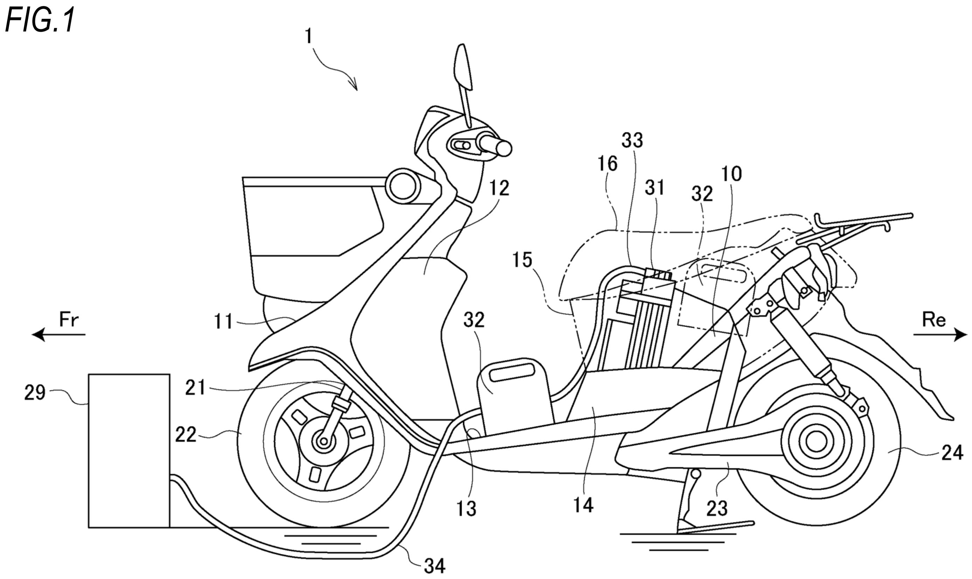

A saddle-type electric vehicle incorporating an anti-theft system according to this example will be described with reference to the accompanying drawings. FIG. 1 is a left side view of the saddle-type electric vehicle according to this example. In the following drawings, an arrow Fr indicates the front of the vehicle, and an arrow Re indicates the rear of the vehicle.

As illustrated in FIG. 1, an electric vehicle 1 is configured by attaching various covers to an underbone type vehicle body frame 10 as the exterior of the vehicle body. A front leg shield 11 is provided at the front of the vehicle, and a rear leg shield 12 is provided behind the front leg shield 11. A floor board 13 extends rearward from a lower portion of the rear leg shield 12, and a lower cover 14 is provided on an upper rear side of the floor board 13. A rear frame cover 15 is provided above the lower cover 14, and a seat 16 is attached to an upper part of the rear frame cover 15 in such a manner that the seat can be opened upward.

A front fork 21 protrudes downward from the front leg shield 11, and a front wheel 22 is rotatably supported by the front fork 21. A swing arm 23 equipped with a motor is provided below the lower cover 14. The swing arm 23 is swingably connected to a pivot bracket (not illustrated) of the vehicle body frame 10, and a rear wheel 24 is rotatably supported at the rear of the swing arm 23. An accommodation space is formed inside the rear frame cover 15 below the seat 16, and a battery 31 is installed in the accommodation space, and a charger (charging device) 32 and the like are accommodated in a removable manner.

When charging the electric vehicle 1, the charger 32 is removed from under the seat 16. A pair of charging cables 33, 34 extend from a main body of the charger 32, one charging cable 33 is connected to the battery 31 of the electric vehicle 1, and the other charging cable 34 is connected to a charging station (on-road charging facility) 29. While the electric vehicle 1 is being charged, a connection status of the charging cables 33, 34 is monitored by the electric vehicle 1, and a mode cannot be changed to a traveling mode while the charging cables 33, 34 are connected. This prevents the electric vehicle 1 from traveling with the charging cables 33, 34 connected to a charging port of the electric vehicle 1.

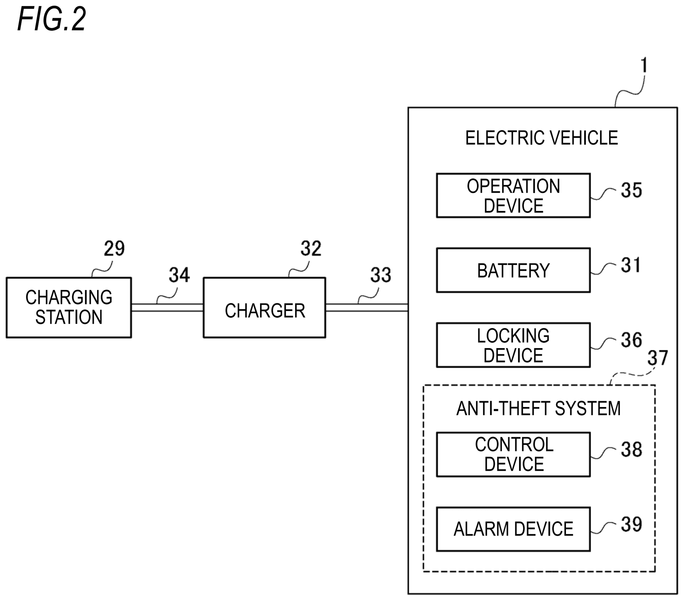

Incidentally, in recent years, the number of roadside charging stations has been increasing, but the number of users who actually charge their electric vehicles at the charging stations has not increased. This is because when an electric vehicle is being charged, the charger is left on the road or the like, and there is a concern that the charging cable may be removed from the electric vehicle and the charger may be stolen. Although electric vehicles are provided with alarm devices to protect against theft, sufficient theft protection is not provided for chargers. Therefore, the electric vehicle 1 of this example is equipped with an anti-theft system 37 (see FIG. 2) that detects removal of the charger 32 from the electric vehicle 1 during charging and activates an alarm device 39.

The anti-theft system of this example will be described below with reference to FIG. 2. FIG. 2 is a block diagram illustrating a charging system of this example. For the sake of convenience, the block diagram in FIG. 2 illustrates a block diagram for implementing a specific process, but it is assumed that the block diagram includes configurations that are normally included in a charging system.

As illustrated in FIG. 2, the charging station 29 is installed in a commercial facility, accommodation facility, or the like, and the electric vehicle 1 is connected to this charging station 29 via the charger 32. A plug of the charging cable 34 of the charger 32 is inserted into a charging port of the charging station 29, and a plug of the charging cable 33 of the charger 32 is inserted into a charging port of the electric vehicle 1. In addition to the power supply line for charging, a control signal line is also built into these charging cables 33, 34. The electric vehicle 1 is charged from the charging station 29 using power lines of the charging cables 33, 34, and charging of the battery 31 is controlled using the signal lines of the charging cables 33, 34.

The electric vehicle 1 is provided with an operation device 35 that accepts various operations, and the battery 31 that is charged by the charger 32. The operation device 35 is provided with a main switch and a mode selection switch. The main switch causes power to be supplied to each part of the electric vehicle 1 from the battery 31, and the mode selection switch allows an alarm mode during charging to be selected as enabled or disabled. In this example, the battery 31 is charged with the main switch turned off, and when the alarm mode is enabled, the anti-theft system 37 operates using power from an auxiliary battery (not illustrated).

The electric vehicle 1 is provided with the anti-theft system 37 including a control device 38 that monitors a charging state of the battery 31 and the alarm device 39 that issues an alarm under the control of the control device 38. The control device 38 activates the alarm device 39 when the control device detects that the charger 32 has been removed while the alarm mode is enabled during charging. In this case, removal of the charger 32 may be detected based on a signal (control pilot signal) between the charging station 29 and the electric vehicle 1. When the signal voltage changes unnaturally due to removal of the charger 32 during charging, an alarm is issued to inform the surroundings of the abnormality. In addition, the charging cables 33, 34 are checked for breaks by monitoring the signals.

Additionally, removal of the charger 32 may be detected based on the charging voltage. For example, removal of the charger 32 is detected when the charging voltage falls outside an appropriate voltage range. When the charging voltage drops due to removal of the charger 32 during charging, an alarm is issued to inform the surroundings of the abnormality. In addition, by monitoring the charging voltage, it is possible to check for disconnection of the charging cables 33, 34 or charging failures due to power outages or the like. The voltage between positive and negative terminals of the battery 31 may be measured as the charging voltage, or the voltage between the positive and negative terminals of the charger 32 may be measured as the charging voltage.

Furthermore, the connection between the electric vehicle 1 and the charger 32 may be locked by a locking device 36, and removal of the charger 32 may be detected based on a malfunction of the locking device 36. The locking device 36 maintains the connection between the electric vehicle 1 and the charger 32, enhancing the anti-theft effect. When the locking device 36 is broken and the charger 32 is forcibly removed, an alarm is issued to inform the surroundings of the abnormality. For example, the locking device 36 is provided with a contact switch of which contacts are closed when the plug of the charging cable 33 is properly inserted into the charging port of the electric vehicle 1. A broken lock is recognized when the contacts are open.

Furthermore, when the control device 38 detects removal of the charger 32 while the alarm mode during charging is disabled, the alarm device 39 is maintained in a deactivated state. When the alarm mode is disabled, unintended activation of the alarm device 39 is prevented in a situation where there is no risk of theft. In other words, when the alarm mode is not enabled by the mode selection switch, even when a driver decides to remove the charger 32 from the battery 31 being charged, no alarm will be issued by the alarm device 39. When an alarm is issued by the alarm device 39, the alarm is stopped by disabling the alarm mode using the mode selection switch.

Processing of the control device 38 of the anti-theft system 37 may be realized by software using a processor, or may be realized by a logic circuit (hardware) formed in an integrated circuit or the like. When a processor is used, the processor reads and executes a program stored in a memory to perform various processes. As the processor, for example, a Central Processing Unit (CPU) is used. The memory is composed of one or more storage media such as a Read Only Memory (ROM) and a Random Access Memory (RAM) depending on the application.

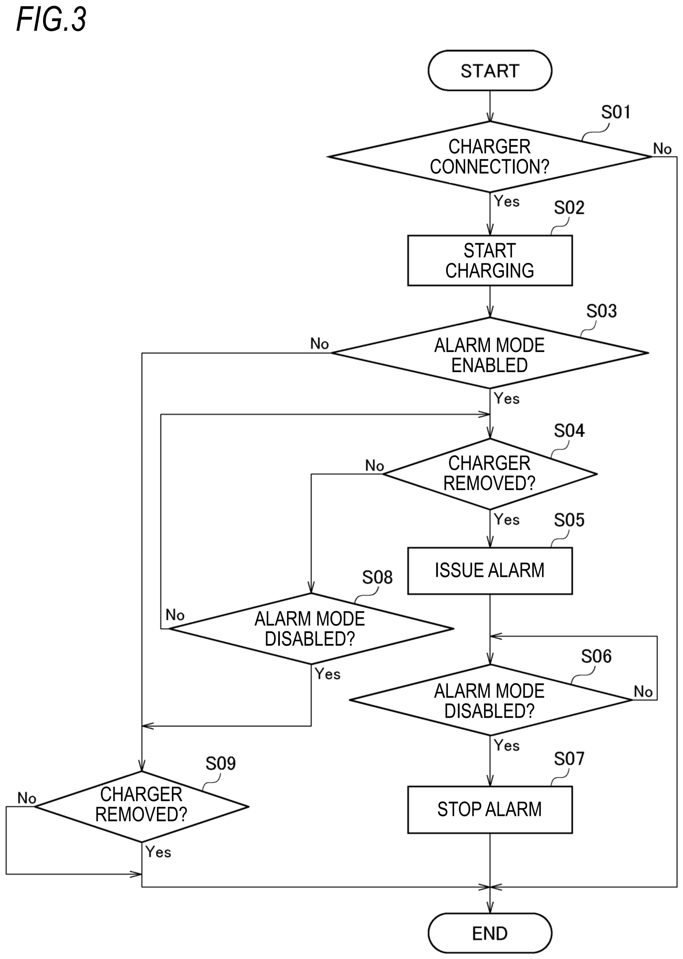

Next, a flow of an anti-theft process of the anti-theft system will be described. FIG. 3 is a flowchart of the anti-theft process of this example.

As illustrated in FIG. 3, when the charging station 29 and the electric vehicle 1 are connected via the charger 32 (step S01), charging of the battery 31 of the electric vehicle 1 from the charging station 29 begins (step S02). When the driver operates the operation device 35 to enable the alarm mode (Yes in step S03), the anti-theft system 37 starts monitoring for theft of the charger 32. In this case, after the main switch is turned ON, the alarm mode is enabled by the mode selection switch, and the main switch is then turned OFF to enable the alarm mode.

When the charger 32 is removed while the alarm mode during charging is enabled (Yes in step S04), the removal of the charger 32 is detected from an unnatural change in the signal voltage between the charging station 29 and the electric vehicle 1, and an alarm is issued by the alarm device 39 (step S05). When the driver operates the operation device 35 to switch the alarm mode from enabled to disabled (Yes in step S06), the issuance of an alarm by the alarm device 39 is stopped (step S07). In this case, after the main switch is turned on, the alarm mode is disabled by selecting disablement of the alarm mode with the mode selection switch.

On the other hand, in step S04, when the charger 32 is not removed when the alarm mode is enabled during charging (No in step S04), the anti-theft system 37 monitors for theft of the charger 32 until the alarm mode is switched from enabled to disabled by the mode selection switch (No in step S08). Furthermore, in step S03, when the alarm mode remains disabled during charging (No in step S03), the anti-theft system 37 will not monitor for theft of the charger 32, and no alarm will be issued by the alarm device 39 even when the charger 32 is removed during charging (Yes in step S09).

In step S03, the main switch and the mode selection switch may be configured as a key switch, or the main switch may be configured as a key switch and the mode selection switch may be configured as a meter operation switch. In addition, the alarm mode may be automatically enabled when the charging station 29 and the electric vehicle 1 are connected via the charger 32. In addition, in the case of a smart key, the alarm mode may be enabled by approaching the electric vehicle 1 or by operating the vehicle. Furthermore, the alarm mode may be enabled by operating a mobile device such as a smartphone.

In addition, in steps S04, S09, removal of the charger 32 may be detected when the charging voltage falls outside an appropriate voltage range. Additionally, removal of the charger 32 may be detected based on malfunction of the locking device 36. Furthermore, when radio waves are emitted from the electric vehicle 1 to the charger 32, and a response signal no longer reaches the electric vehicle 1 from the charger 32, the removal of the charger 32 may be detected as the charger 32 being located outside a specified distance from the electric vehicle 1. Furthermore, in step S05, when an alarm is issued by the alarm device 39, an alarm message may be sent to driver's mobile device by email, push notification, short mail, in-app notification, or the like.

As described above, according to the anti-theft system 37 of this example, when the charger 32 is removed during charging, an alarm is issued to inform the surroundings of the abnormality, thereby effectively preventing the charger 32 from being stolen. Generally, a connection status of the charger 32 is monitored to prevent the electric vehicle 1 from traveling while the charger 32 is connected, and by utilizing this monitoring function, the anti-theft system 37 for the charging device can be easily added.

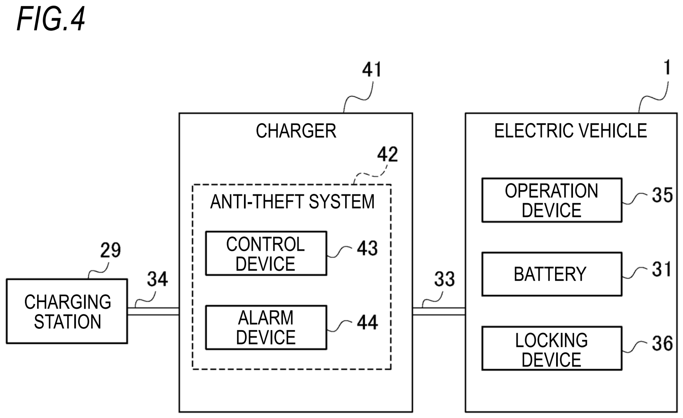

In this example, the electric vehicle is provided with an anti-theft system, but the charger may be provided with an anti-theft system. For example, as illustrated in a modification example in FIG. 4, a control device 43 and an alarm device 44 may be provided as an anti-theft system 42 for a charger 41. In addition, both the electric vehicle and the charger may be provided with a control device and an alarm device as an anti-theft system.

Furthermore, in this example, a charging station is exemplified as the on-road charging facility, but the on-road charging facility is not particularly limited as long as it is a facility used for charging an electric vehicle on the road via a charging device.

In this example, an authentication function for the anti-theft system may be added by installing a program in the electric vehicle. This program is stored in a storage medium. The storage medium is not particularly limited, and may be a non-transitory storage medium such as an optical disk, a magneto-optical disk, or a flash memory.

Furthermore, the anti-theft system of this example is not limited to the above-mentioned saddle-type electric vehicle, but may be applied to other types of saddle-type electric vehicles. A saddle-type vehicle is not limited to all vehicles in which a rider sits astride a seat, but also includes scooter-type vehicles in which a rider does not sit astride the seat.

As described above, a first aspect is an anti-theft system (37) for a charging device (charger 32) that supplies power to a battery (31) of an electric vehicle (1) from an on-road charging facility (charging station 29), the system including a control device (38) that monitors a charging state of the battery, and an alarm device (39) that issues an alarm under control of the control device, where the control device activates the alarm device when the control device detects that the charging device is removed during charging. According to this configuration, when the charging device is removed during charging, an alarm is issued to inform the surroundings of the abnormality, thereby effectively preventing theft of the charging device. In addition, a connection status of the charging device is generally monitored to prevent the electric vehicle from traveling while the charging device is connected, and by utilizing this monitoring function, an anti-theft system for the charging device can be easily added.

In a second aspect, the control device, in the first aspect detects removal of the charging device based on a signal between the on-road charging facility and the electric vehicle. According to this configuration, when communication is interrupted by removing the charging device during charging, an alarm is issued to inform the surroundings of the abnormality. By monitoring the signal, it is possible to check for broken charging cables.

In a third aspect, the control device, in the first aspect, detects removal of the charging device based on a charging voltage. According to this configuration, when the charging voltage drops due to removal of the charging device during charging, an alarm is issued to inform the surroundings of the abnormality. By monitoring the charging voltage, it is possible to check for charging failures such as a broken charging cable or a power outage.

In a fourth aspect, connection between the electric vehicle and the charging device is locked by a locking device (35), and the control device detects removal of the charging device based on a malfunction of the locking device, in the first aspect. According to this configuration, the connection between the electric vehicle and the charging device is maintained by the locking device, thereby improving the anti-theft effect. When the locking device is broken and the charging device is forcibly removed, an alarm is issued to inform the surroundings of the abnormality.

In a fifth aspect, an alarm mode during charging can be selected to be enabled or disabled, and the control device activates the alarm device when the control device detects that the charging device is removed while the alarm mode during charging is enabled, and maintains the alarm device in a deactivated state when the control device detects that the charging device is removed while the alarm mode during charging is disabled, in any one of the first to fourth aspects. According to this configuration, when the alarm mode is disabled, unintended activation of the alarm device can be prevented in a situation where there is no risk of theft.

Although the present example is described, other examples may be made by combining the above-described examples and modification examples in whole or in part.

Furthermore, the technology of the present invention is not limited to the above-described examples, and may be modified, substituted, or changed in various ways without departing from the spirit and scope of the technical concept. Furthermore, when technological advances or derived technologies allow the technical ideas to be realized in a different way, they may be implemented using that method. Therefore, the claims cover all embodiments that may fall within the scope of the technical concept.

### REFERENCE SIGNS LIST

1: electric vehicle
29: charging station (on-road charging facility)
31: battery
36: locking device
32, 41: charger (charging device)
37, 42: anti-theft system
38, 43: control device
39, 44: alarm device

## Claims

1. An anti-theft system (37) for a charging device (32) that supplies power to a battery (31) of an electric vehicle (1) from an on-road charging facility (29), comprising:
a control device (38) configured to monitor a charging state of the battery (31); and
an alarm device (39) configured to issue an alarm under control of the control device (38), wherein
the control device (38) configured to activate the alarm device (39) when the control device (38) detects that the charging device (32) is removed during charging.

2. The anti-theft system according to claim 1, wherein the control device configured to detect removal of the charging device based on a signal between the on-road charging facility and the electric vehicle.

3. The anti-theft system according to claim 1, wherein the control device configured to detect removal of the charging device based on a charging voltage.

4. The anti-theft system according to claim 1, wherein
connection between the electric vehicle and the charging device is locked by a locking device, and
the control device configured to detect removal of the charging device based on a malfunction of the locking device.

5. The anti-theft system according to any one of claims 1 to 4, wherein
an alarm mode during charging is selected to be enabled or disabled, and
the control device activates the alarm device when the control device detects that the charging device is removed while the alarm mode during charging is enabled, and the control device maintains the alarm device in a deactivated state when the control device detects that the charging device is removed while the alarm mode during charging is disabled.
